# EUROPEAN PATENT SPECIFICATION

(11) **EP 4 653 916 B1**
(45) Date of publication and mention of the grant of the patent: **20.05.2026**
(21) Application number: 24177459.5
(22) Date of filing: 22.05.2024
(51) Int. Cl.: G01S 11/14, G01S 7/539, G01S 15/88

(54) **SYSTEMS AND METHODS FOR LABELLING SONAR DATA**
SYSTEME UND VERFAHREN ZUR MARKIERUNG VON SONARDATEN
SYSTÈMES ET PROCÉDÉS D'ÉTIQUETAGE DE DONNÉES SONAR

(43) Date of publication of application: 26.11.2025
(73) Proprietor: Helsing GmbH, 81671 Munich (DE)
(72) Inventor: RAUCHENSTEINER, Michael, 81671 Munich (DE)
(74) Representative: Haseltine Lake Kempner LLP

(56) References cited:
- CN-A- 117 198 330
- IRFAN MUHAMMAD ET AL: "DeepShip: An underwater acoustic benchmark dataset and a separable convolution based autoencoder for classification", EXPERT SYSTEMS WITH APPLICATIONS, ELSEVIER, AMSTERDAM, NL, vol. 183, 5 June 2021 (2021-06-05), XP086757808, ISSN: 0957-4174, [retrieved on 20210605], DOI: 10.1016/J.ESWA.2021.115270

## Description

### Field of the Invention

The present invention relates to systems and methods for generating labels for sonar data, and particularly to systems and methods for automatic generation of labels for passive sonar data.

### Background of the Invention

In passive sonar, one of the primary technical challenges is to be able to detect and discern different vessel signatures (e.g. ship, submarine, tanker etc.) within acoustic data that is recorded by hydrophones (i.e. under water microphones). In particular, as vessels travelling in the surrounding water each emit sound, it is possible to collect the hydrophone recordings and to analyse the audio data to determine whether there are any vessels present in the recording, and further to determine what types of vessels are audible, and therefore to determine what and which vessels are in the vicinity of the hydrophone.

Within this there are broadly three different classes of determination activity:
- Detection: determining if and when there is any vessel audible, or if the recording just contains environmental ambient noise;
- Classification: determining what type of vessel (e.g. tanker, container ship, submarine etc.) is in audible; and
- Identification: determining whether one specific vessel (e.g. the MS Hamburg) is audible, and for instance whether it is audible in multiple different recordings.

Hydrophones using passive sonar come in many different forms. One specific example is static hydrophone networks, which are often installed around critical infrastructure such as harbors, and which are configured to monitor the surrounding area using passive sonar techniques.

In the state of the art, the determination of the presence of vessels and further the specific identification of vessels in passive sonar data was performed by skilled human operators. The operators used a combination of experience, knowledge and manuals of collected data to perform identification primarily using the sound of the collected audio recording. Some of this process has been computerized.

However, there remains the desire to more quickly and accurately analyse passive sonar data to perform the above three difference classes of determination activity.

More broadly, an increasingly dominant approach to audio detection, classification and identification are data-driven methods. In particular, machine learning models such as deep artificial neural networks are considered to be state-of-the-art on common benchmarks within these problem categories. However, these models require large amounts of labelled training data to achieve good performance.

Given the problems as described above in performing detection, classification and identification of vessels in passive sonar data, it would be desirable to leverage data-driven methods in this field, in particular machine learning models. To accurately train such models requires a large dataset. This is not in of itself problematic. In particular, even without direct access to any hydrophone network, many existing hydrophone networks make their historic recordings publicly available to drive research. Further, for instance, if direct access to a network of hydrophones were possible, large amounts of recording data could be collected by simply passively recording.

However, even given a large dataset, to accurately train such models in a supervised manner requires the training data to be labelled. Instead, hydrophone recordings are simply audio data stored as a timeseries of amplitude measurements, for instance of sound pressure. Therefore, with the relative ease of accessing large amounts of hydrophone recordings, a limiting factor in creating training datasets is the requirement to annotate (label) the hydrophone recordings. Human annotation of raw hydrophone recordings requires trained professionals as noted above that are able to distinguish different vessel characteristics based on sound. However, given the large amount of data needed, manual annotation suffers from a number of distinct problems: it is slow, inaccurate, costly and inefficient. Hence automated manners of labelling hydrophone sound recordings are desirable.

Certain aspects of the present disclosure and their embodiments may provide solutions to these or other challenges.

"DeepShip: An underwater acoustic benchmark dataset and a separable convolution based autoencoder for classification" (IRFAN MUHAMMAD ET AL, EXPERT SYSTEMS WITH APPLICATIONS, ELSEVIER, AMSTERDAM, NL, vol. 183, 5 June 2021 (2021-06-05), XP086757808, ISSN: 0957-4174, DOI: 10.1016/J.ESWA.2021.115270 [retrieved on 2021-06-05]) concerns underwater acoustic classification.

CN 117 198 330 A concerns a sound source identification method and system.

### Statement of the Invention

Aspects of the invention are defined by the accompanying claims. Preferred optional features are defined in the dependent claims.

According to an aspect, there is provided a computer-implemented method of automatically labelling passive sonar hydrophone data for use as a supervised learning dataset, comprising:for a selected passive sonar hydrophone: obtaining actual received sound data throughout a detection time-period, obtaining a hydrophone location, and determining a maximum detection radius around the hydrophone location; retrieving timestamped vessel data associated with vessels within the maximum detection radius during the detection time-period, the timestamped vessel data comprising for each vessel: vessel location information and vessel identification information; determining, for a particular vessel identification information, an estimated received sound metric foreach vessel throughout the detection time-period, based on the timestamped vessel data; labelling the actual received sound data, the labels including the particular vessel identification information and being associated with times during the detection time-period where the estimated received sound metric is above a threshold.

The estimated received sound metric may be an estimated received sound pressure level of each vessel received at the hydrophone, and the labels may include the particular vessel identification information and may be associated with times during the detection time-period where the estimated received sound is above the threshold.

The estimated received sound metric may be a signal-to-interference-plus-noise ratio (SINR) signal estimated based on an estimated sound of the respective vessel and estimated noise and/or ambient sound, in particular wherein: the signal variable is a combined estimated received sound, defining an estimated sound of each vessel received at the hydrophone throughout the detection time-period, for vessels of the particular vessel identification information; the noise variable is a combined estimated received sound, defining an estimated sound of each vessel received at the hydrophone throughout the detection time-period, for vessels with vessel identification information different from the particular vessel identification information; the interference variable is an ambient sound, defining ambient sound from all sound sources which are not vessels; and/or the labels including the particular vessel identification information and being associated with times during the detection time-period where the SINR is above the threshold.

The or a combined estimated received sounds, for vessels of the particular vessel identification information and for vessels with vessel identification information different from the particular vessel identification information, may be determined based on determining the estimated received sound for each vessel throughout the detection time-period, in particular comprising: determining vessel trajectory for reach vessel throughout the detection time-period, based on the timestamped vessel data; and preferably, determining vessel velocity for each vessel, based on the timestamped vessel data and the vessel trajectory, throughout the detection time-period.

Determining of the estimated received sound for each vessel throughout the detection time-period may further comprise: determining a source sound for each vessel, based on the vessel identification information and, preferably, the vessel velocity; determining transmission loss for each vessel throughout the detection time-period, the transmission loss defining the proportion of the source sound which arrives at the hydrophone; and combining the source sound and the transmission loss to arrive at the estimated received sound for each vessel throughout the detection time-period.

Determining the source sound may be further based on regression based on historic estimates of calibrated hydrophones.

Determining the vessel trajectory may comprise using a kinematic model.

Determining the transmission loss may be based on an underwater sound propagation model.

Determining the ambient sound may be based on periods during the actual received sound data when the actual received sound data is lowest, and/or when no vessels are determined to be in the maximum detection radius, and optionally wherein determining the ambient sound is based on pre-defined historical values.

A total estimated received sound at the hydrophone may be determined, comprising: combining: the combined estimated received sound for each vessel of the particular vessel identification information; with the combined estimated received sound for each vessel with vessel identification information different from the particular vessel identification information; and with the ambient sound. Optionally, the methods may further include comparing the total estimated received sound with the actual received sound data to determine the accuracy of the total estimated received sound.

The threshold may be chosen to be relatively high when for instance: it is determined that there is a relatively high number of vessels determined to be in the maximum detection radius, and/or it is determined that the hydrophone is of relatively low sensitivity.

The vessel identification information may comprise vessel type and/or a unique vessel identifier; and/or the timestamped vessel data may further comprise the speed and heading of the vessel.

According to an aspect there is provided a computer-implemented method of training a vessel identification machine learning model for detecting, classifying and/or identifying vessels in passive sonar hydrophone data, comprising: training the vessel identification model using the actual received sound data labelled according to any other aspect or embodiment of the present application.

According to an aspect there is provided a computer-implemented method of detecting, classifying and/or identifying vessels in passive sonar hydrophone data using a vessel identification machine learning model, comprising: obtaining actual received sound data from a passive sonar hydrophone; detecting, classifying and/or identifying vessels in the actual received sound data, comprising inputting the actual received sound data into a vessel identification machine learning model as trained by any aspect of embedment of the present application; and receiving at least one detection, classification and/or identification result as output.

According to an aspect there is provided a computer-readable storage medium comprising instructions which, when executed by a computer, cause the computer to carry out methods in accordance with any aspect or embodiment of the present application, for instance including the training as mentioned in any aspect or embodiment of the present application, or for instance including the detecting, classifying and/or identifying vessels as mentioned in any aspect or embodiment of the present application.

According to an aspect there is provided an information processing apparatus comprising a memory and a processor connected to the memory, wherein the processor is configured to perform methods in accordance with any aspect or embodiment of the present application, for instance including the training as mentioned in any aspect or embodiment of the present application, or for instance including the detecting, classifying and/or identifying vessels as mentioned in any aspect or embodiment of the present application.

Some aspects and embodiments of the present application may be considered to provide accurate estimate of one dataset, the actual sound recording of a hydrophone, from another dataset, information about vessels near the hydrophone at a particular time.

In particular, some aspects and embodiments of the present application may advantageously accurately estimate one set of physical information, sound data, from another set of physical information, information about vessels that might contribute to this sound data.

In this regard, some aspects and embodiments of the application may provide accurate data estimation methods, as the more accurate the estimation as compared to the actual data, the more accurate and reliable the labels which are associated with the estimation data will be when applied to the actual data.

Accordingly some aspects and embodiments of the present application are considered as advantageously allowing for better labelling of actual data by providing a method of improved accuracy of estimation of that data. The actual data may be audio recordings from passive sonar hydrophones, and the estimated data may be an estimation of that data, where for instance the estimation is made with improved accuracy.

Some aspects and embodiments of the present application may advantageously provide a manner of automatically labelling audio recordings from passive sonar hydrophones, and may in particular do so in a manner that is fast, accurate and efficient, and without the need for human interaction.

Some aspects and embodiments of the present application may advantageously provide an automated manner of labelling (annotating) hydrophone recording data for supervised training of machine learning models such as deep artificial neural networks, where the labelling may use publicly available vessel positioning data.

According to some aspects and embodiments of the present application, the estimation and the labelling may advantageously be done automatically and with increased speed, accuracy and efficiency.

According to some aspects and embodiments, it may advantageously be possible to label received sound data from hydrophones with information concerning for instance the number, the type, and/or the identity of vessels within the maximum detection radius of the hydrophone and the times at which they are contributing to the received sound of the hydrophone recording.

Some aspects and embodiments of the present application may advantageously be able to label hydrophone recording data with multiple labels relating to different vessel types and different vessel classifications, accounting for a plurality of vessels within the maximum detection radius at the same time during the detection time-period.

Some aspects and embodiments of the present application may advantageously be able to accurately label hydrophone recording data in a manner that allows and accounts for interference arising from the plurality of vessels in the maximum detection radius during the detection time-period.

The improved accuracy of the labelled actual received sound data as output by some aspects and embodiments of the present application may therefore be advantageously used to provided improved accuracy training of machine learning models, and further still may therefore be advantageously used to create improved machine learning models which are better and more accurate at performing vessel detection, classification and/or identification in passive sonar hydrophone recordings.

The provision of automatic labelling of the actual received sound data as provided by some aspects and embodiments of the present application allows a larger quantity of labelled data, thereby also improving the training and accuracy of any such machine learning models.

Preferred optional features are defined in the dependent claims.

Various aspects and embodiments of the invention are described without limitation below, with reference to the figures.

### Brief Description of the Drawings

There now follows, by way of example only, a detailed description of preferred embodiments of the present invention, with reference to the figures identified below.
**Figure 1** shows a flow chart of a method;
**Figure 2** shows an example of audio recording data;
**Figure 3** shows an example visualisation of labels applied to a hydrophone audio recording;
**Figure 4** shows an example visual representation of the comparison between actual and estimated hydrophone sound data;
**Figure 5** shows an example visual representation of a signal-to-interference-plus-noise ratio;
**Figure 6** shows a flow chart of a method;
**Figure 7** shows a flow chart of a method;
**Figure 8** is a diagram illustrating an apparatus.

### Detailed Description

In the following description, functionally similar parts carry the same reference numerals between figures. The following sets forth specific details, such as particular aspects, embodiments or examples for purposes of explanation and not limitation. It will be appreciated by one skilled in the art that other examples may be employed apart from these specific details. Aspects and embodiments of the invention are now described, without limitation and by way of example only, with reference to the accompanying drawings.

Some aspects of the present application may advantageously create an accurate estimate of one dataset, the actual sound recording of a hydrophone, from another dataset, information about vessels near the hydrophone at a particular time. In particular, aspects of the present application may advantageously accurately estimate one set of physical information, sound data, from another set of physical information, information about vessels that might contribute to this sound data. In this regard, some aspects of the application are concerned with accurate data estimation methods, as the more accurate the estimation as compared to the actual data, the more accurate and reliable the labels which are associated with the estimation data will be when applied to the actual data. Hence some aspects of the present application are considered as allowing for better labelling of actual data by providing a method of improved accuracy of estimation of that data. The actual data may be audio recordings from passive sonar hydrophones, and the estimated data may be an estimation of that data, where for instance the estimation is made with improved accuracy.

Some aspects of the present application may advantageously provide a manner of automatically labelling audio recordings from passive sonar hydrophones, and may in particular do so in a manner that is fast, accurate and efficient, and without the need for human interaction.

Some aspects of the present application broadly concern an automated manner of labelling (annotating) hydrophone recording data for supervised training of machine learning models such as deep artificial neural networks, where the labelling may use publicly available vessel positioning data.

In particular, as previously described, historic audio recordings of hydrophones are publicly available. Further, large amounts of historic vessel data is also publicly available, particularly for civilian vessels. In particular, a common and publicly available source of vessel data is the so-called automatic identification system (AIS), which as implemented by the International Maritime Organisation (IMO) are systems capable of providing information about the vessel to other vessels and to coastal authorities automatically. For instance, as of 31 December 2004, AIS is required to be fitted aboard all vessels of 300 gross tonnage and upwards engaged on international voyages, cargo ships of 500 gross tonnage and upwards not engaged on international voyages, and all passenger ships irrespective of size. Hence there is a large amount of useful AIS data in existence. Further, the data is a reliable and has high fidelity, and even for a single vessel has many data points. In particular, vessels fitted with AIS are required to maintain AIS in operation at all times except where international agreements, rules or standards provide for the protection of navigational information. However, any other suitable data source is envisaged. For instance, vessel data may be used from satellite imagery systems, or radar data etc.

Hence aspects of the present application have identified that vessel data, such as AIS data, could be used as the data source for providing the labels in hydrophone recording data. In particular, for instance, known vessel data could be used to create an estimation of the sounds in the hydrophone recording data, and where the more accurately this estimation is created the more accurate the labelling of the actual hydrophone recording data could be. In particular, some aspects of the present application have identified that for a given hydrophone recording data, taking the known hydrophone location and the known time of the hydrophone recording data, it is possible to lookup using vessel data which vessels were in the vicinity of the hydrophone during the time-period of the hydrophone recording. Given this information, aspects of the present application provide manners of identifying the audio signal of vessels in the hydrophone recording through correlating this information with the vessel data. Further still, aspects of the present application concern techniques for creating an estimated hydrophone recording given the known information from the vessel data - such as position, time and vessel identification information - that will have contributed to the audio profile in the area surrounding the hydrophone, and then using the results from this estimated hydrophone recording data to label the actual received hydrophone recording data. Hence, aspects of the present application may be described as attempting to accurately create one dataset (the hydrophone recording data) from another dataset (the vessel data), where the accuracy and confidence of your created estimated hydrophone recording data can be checked against the actual hydrophone recording data to check the veracity of your underlying assumptions and estimation techniques, such that labelling can be performed in a reassured and accurate manner.

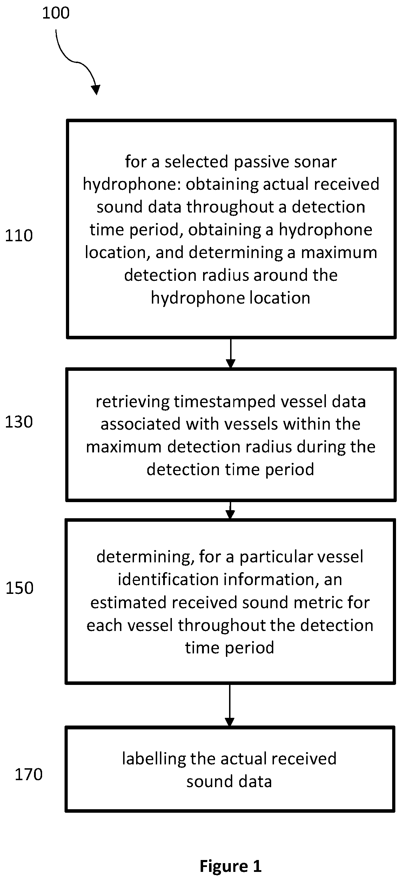

**Figure 1** shows a flow chart of a computer-implemented method 100 for automatically labelling passive sonar hydrophone data for use as a supervised learning dataset, for instance for downstream supervised learning tasks, using estimation methods according to aspects of the present application.

In step 110, for a selected passive sonar hydrophone the actual received sound data throughout a detection time-period is obtained, the hydrophone location is obtained, and the maximum detection radius around the hydrophone location is determined.

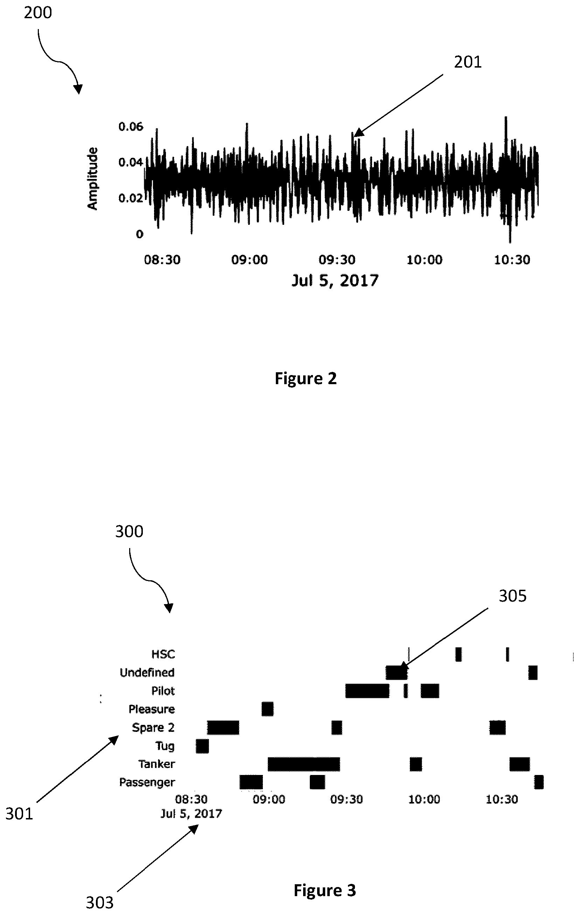

In particular, **Figure 2** shows an example of audio recording data 200,, and in particular shows actual received sound pressure levels 201 as derived from the audio recording data 200 and as received by a hydrophone over a detection time-period. As previously described, this data may be publicly available, but regardless may be retrieved from a database or may be from a live recording. The actual received sound data shows the received audio sound pressure as measured by amplitude over time, for instance in as depicted from 8:30 to 10:45 on 5^{th} July 2017. However, the detection time-period may be of any length and the units of measurement can be any appropriate unit. This audio data 200 is the combined contribution of every audio source within the detection radius of the hydrophone as can be measured by the hydrophone, as limited by its sensitivity. Hence the audio data 200 includes the audio contribution from vessels, as well as the audio contribution from everything which is a non-vessel which in the present instance shall be referred to as ambient sound. In particular, unless specifically defined otherwise, the sound data and aspects of sound primarily considered in the present application are typically sound pressure levels as measured in decibels (dB), and covers all appropriate ranges of sound including sound both audible and not-audible to the human ear, and for instance in particular is concerned with the ranges of sound within which all sea vessels emit.

The hydrophone is of a known location, and the maximum detection radius can be determined in a number of different ways. Regardless, the maximum detection radius is determined to be the maximum radius around the hydrophone which the outlined methods will concern and constrain themselves to, and can be user defined for different contexts. For instance, the determining of the maximum detection radius includes that the maximum detection radius may be chosen to be only a particular area of concern, or alternatively may be chosen to limit the computational complexity of the outlined methods. Alternatively, the maximum detection radius can be defined based on the hydrophone hardware, such as the radius within which it is determined to be able to accurately and usefully detect sound and depends for instance on the physical hardware of the hydrophone and the geography of the area in which it is located. Typical values for the maximum detection radius may fall within the 10km to 15km range. In the context of the present application, it is considered that the maximum detection radius for any particular hydrophone is either known and is a value that can be retrieved, else is able to be estimated using known methods, or is user-defined according to any other appropriate consideration.

In step 130 - that may be performed before, after or at the same time as step 110 - timestamped vessel data associated with vessels within the maximum detection radius during the detection time-period is obtained, the timestamped vessel data comprising for each vessel: vessel location information and vessel identification information.

The timestamped vessel data may be taken from any appropriate source, such as the AIS data as previously described, however as previously described aspects of the present application are agnostic as to the actual provider of the information. An alternative example data source is data provided by state and/or military institutions, as this would provide a more complete collection of vessel data including data from, for instance, military vessels, very small vessels, pirates etc.

Regardless of the data source, the timestamped vessel data may include a plurality of datapoints associated with a plurality of vessels. For each vessel, at least vessel identification information and timestamped vessel location information is provided. The vessel identification information provides information from which at least the type of vessel can be determined (such as for instance tanker, container, submarine etc.) and may preferably include additional information such as a unique vessel identifier, for instance the Maritime Mobile Service Identity (MMSI). The timestamped vessel location information will include at least one datapoint where the location of the vessel was within the maximum detection radius during the detection time-period. The number of datapoints per any specific vessel will depend on how long the vessel spent within the maximum detection radius during the detection time-period. For instance, the timestamped vessel data may be transmitted by the vessel, or collected by any appropriate vessel monitoring system, periodically and/or at fixed intervals.

In some specific embodiments, the timestamped vessel data may include further information, such as for instance the vessel speed and the vessel heading. In some specific embodiments wherein the timestamped vessel data does include vessel speed and vessel heading, these specific embodiments may advantageously may allow for more accurate labelling of the actual received sound data as the various estimates and models used in the process benefit from additional information. For instance, the vessel speed is correlated with the loudness and sound of the vessel and can be used in any such estimation, and the vessel heading can be used to more accurately determine the vessel trajectory as will be outlined further below.

Of the available timestamped vessel data, timestamped vessel data is selected which is both within the detection time-period of the selected actual received sound data 200, and which is within the maximum detection radius of the hydrophone from which the actual received sound data 200 was received.

In instances where step 130 is performed before step 110, timestamped vessel data may be retrieved for a large geographical location and over a large time-period, and then may later be filtered to only relevant timestamped vessel data which is within the maximum detection radius during the detection time-period.

In step 150, for a particular vessel identification information, an estimated received sound metric for each vessel throughout the detection time-period is determined, based on the timestamped vessel data.

In particular, of the available fields (e.g. class, identification, type etc.) within the vessel identification information of the selected timestamped vessel data set, a particular vessel identification information field is selected. For instance, the particular vessel identification information may be selected at the class or type level such as tankers, containers or submarines, or alternatively a particular vessel identification information may be selected at the identity level such as MS Hamburg.

For that particular vessel identification information, the subset of timestamped vessel data for vessels satisfying that criteria is selected. For this subset of timestamped vessel data, filtered by the particular vessel identification information, an estimation is made of a metric relating to what sound would be received at the hydrophone from the vessel(s) of that particular vessel identification. In other words, an estimation is made of a metric relating to the combined sound contribution the vessel(s) of that particular vessel identification information make to the overall actual received sound data received at the hydrophone. In particular, the metric may take a number of specific examples, as will be described further below. For instance, the metric may be an estimation of the received sound pressure levels (in dB) of each vessel of that particular vessel identification information received at the hydrophone. Alternatively, the metric may be a signal-to-interference-plus-noise ratio (SINR) where the signal variable may be an estimation of the received sound of each vessel of that particular vessel identification information received at the hydrophone. These specific examples will be described further below.

Regardless of the specific metric chosen, aspects of the present application determine an estimated received sound metric for each vessel of the particular vessel identification information and throughout the detection time-period, and do so based on the timestamped vessel data including the vessel location information. In particular, the estimation and the labelling may advantageously be done automatically and with increased speed, accuracy and efficiency.

It is noted that whilst step 150 defines the determination as being for a particular vessel identification information, this means at least one, as the process can be performed for a plurality of different particular vessel identification information classes either at the same time, or alternatively the process can be performed multiple times where one particular vessel identification information can be determined in sequence after the other. Hence, as will be explained with reference to step 170 below, some aspects of the present application may advantageously provide a multi-labelled hydrophone recording dataset in a quick, efficient and automatic manner.

In step 170, the actual received sound data received at the hydrophone throughout the detection time-period is labelled, with the labels including the particular vessel identification information and being associated with times during the detection time-period where the estimated received sound metric is above a threshold.

Accordingly, some aspects of the present application use this estimated metric of the received sound for a particular vessel identification information to determine where and when in the detection time-period it would be appropriate or sufficiently accurate to create a label with the particular vessel identification information. In other words, given the estimated sound metric - derived as previously described based on what is known from the timestamped vessel data about the location and identification of vessels in the maximum detection radius during the detection time-period - some aspects of the present application may determine at what times during the detection time-period it can be considered that the estimated combined sound generated by all the vessels of that particular vessel identification would be a sufficient enough contribution to the actual received sound of the hydrophone that it is appropriate or sufficiently accurate to label those times with the particular vessel identification information.

In particular, the determination of which times during the detection time-period should be labelled with the particular vessel identification is arrived at by applying a threshold to the estimated received sound metric. Hence it is determined at what times throughout the detection time-period the estimated received sound metric is above the threshold, and at these times it is determined that a label of the particular vessel identification information should be applied. The threshold itself can be chosen in any appropriate manner, and for instance may be based on the level of confidence is had in the accuracy of the estimated sound metric. For instance, the higher the confidence in the accuracy of the sound metric, the lower the threshold, and vice versa. In other words, in certain regards it can be considered that the estimated sound metric may be used as an indicator of where some aspects of the present application consider it sufficiently (likely to be) accurate to label the actual received sound data received by the hydrophone with a particular vessel identification (e.g. tanker, submarine, or a unique vessel ID). Further examples of how the threshold may be determined and factors affecting it in specific embodiments will be described further below.

Hence through any of the processes as described above, a method of labelling the actual received sound data of a hydrophone recording is arrived at by some aspects of the present application. The final labelled actual received sound data will include labels of at least one particular vessel identification information (e.g. tanker, submarine or a unique vessel ID etc.), where the labels are associated with times throughout the detection time-period where it is considered that the sound contribution of that particular vessel identification information is a material contribution to the overall actual received sound data recorded by the hydrophone (for instance as shown in **Figure 2****).**

An example manner of visualizing the labels is depicted in **Figure 3****,** which can for instance be considered as one visual representation 300 of an example of the final labelled dataset which can be used in downstream supervised training of a machine learning model, for instance a machine learning vessel identification model for detecting, classifying or identifying vessels in passive sonar hydrophone data. For ease of visual understanding, and by way of example, the visual representation 300 of the labels as depicted in **Figure 3** is shown as applying to the actual received sound data 200 as depicted in **Figure 2****,** and hence both figures share the same detection time-period etc.

As shown in **Figure 3****,** particular vessel identification information 301 forming part of the labels are shown on the y-axis, where the particular vessel identification information can relate to any class of identification, including for instance as previously described labels of vessel types (e.g. tanker, submarine, tug, passenger) as would be useful in vessel classification tasks, or for instance unique vessel identification (e.g. MS Hamburg) as would be useful in vessel identification tasks. The time 303 of the detection time-period is shown on the x-axis. particular vessel identification information and time-periods for which the label has been applied are shown as blocks 305. As can be seen, a single time may be labelled with one or more different labels, as for instance a plurality of vessels were considered to materially contribute to the actual received sound data received by the hydrophone at that point in time, as determined by the methods of the present application. Hence whilst **Figure 3** is merely an example visual representation 300, the labels of some aspects of the present application may be considered to be a combination of the information visualized in **Figure 3****.**

As mentioned above, in a specific embodiment the estimated sound metric may be an estimated received sound (e.g. sound pressure levels) of each vessel received at the hydrophone, and therefore the labels include the particular vessel identification information and are associated with times during the detection time-period where the estimated received sound is above the threshold.

A number of different techniques may be used to estimate the received sound a particular vessel might provide to the hydrophone from any particular location. For instance, given the location of a particular vessel and the vessel identification information - providing for instance the type (tanker, submarine, container) etc. or the unique identifier which would also allow the type of vessel to be determined - it is possible to use known estimation methods and techniques to determine an estimated received sound from that vessel. For instance, average values for the loudness or sound output of particular vessel types (e.g. as directly measured 1m from the vessel whilst it is in operation) can be looked up and used, and known techniques for determining the transmission of sound underwater as a function of distance can be used. Hence an estimated received sound received by the hydrophone from a particular vessel, at a particular time, from a particular location, can be determined. These known techniques and methods will not be described further here.

Hence, in a specific embodiment, a threshold is chosen for the estimated received sound which is, for instance, sufficiently high to create a label only for estimated received sounds (i.e. sound pressure values) high enough that it is considered that there is a sufficiently high likelihood of a material contribution or discernable sound in the actual received sound data, e.g. for a tanker at close range label. Advantageously, according to some aspects of the present application, this may allow for a method of accurately, automatically and efficiently labelling the actual received sound data.

As mentioned above, in a specific embodiment the estimated sound metric can be a signal-to-interference-plus-noise ratio (SINR) or instance, this may be a specific embodiment of Step 150 of **Figure 1** in which a signal-to-interference-plus-noise ratio (SINR) is determined for at least one particular vessel identification information class.

SINR is a common calculation in the field, where the signal variable is divided by the combination of the interference and noise variables, and is used to measure aspects of signal quality and will not be described further here.

In particular, in a specific embodiment a particular vessel identification information is chosen - as this will form the label used in aspects of the method described later - which may for instance be any particular vessel identification information of interest, such as vessel type (e.g. tanker, submarine or container) or unique vessel (e.g. MS Hamburg). In aspects of the present application, the signal variable is the combination of the estimated received sounds for the vessels of the particular vessel identification information, the noise variable is the ambient sound, and the interference variable is the combination of the estimated received sounds for vessels with vessel identification information different from the particular vessel identification information.

As previously outlined, a number of different techniques may be used to estimate the received sound a particular vessel might provide to the hydrophone from any particular location. In line with these techniques. Similarly the estimated received sound for all relevant vessels, for both vessels of the particular vessel identification information and for vessels with vessel identification information different from the particular vessel identification information, may be determined in a number of different ways.

In a specific embodiment, the estimated received sound for all relevant vessels, for both vessels of the particular vessel identification information and for vessels with vessel identification information different from the particular vessel identification information, may be determined based on determining an estimated a vessel trajectory for each vessel throughout the detection time-period. The vessel trajectory may be determined based on the timestamped vessel data, the vessel trajectory comprising for instance an estimated vessel trajectory for times during the detection time-period where no timestamped vessel location information is available, i.e. for all locations between known timestamped vessel location information datapoints.

In particular, the process takes the entire dataset of all the timestamped vessel data for all vessels determined to be within the maximum detection radius during the detection time-period. For each vessel, given the timestamped vessel data, comprising the vessel location at various times and the vessel identification information, it is possible to estimate the vessel trajectory throughout the detection time-period using a number of assumptions.

In particular, estimating the vessel trajectory can be done in a number of different ways using techniques known in the field, each with varying degrees of complexity and accuracy. For instance, at a simplistic level given two timestamped locations of a particular vessel a line can be drawn between them. Alternatively, for instance, known kinematic models - which will not be described in further detail here - can be used to extrapolate a full trajectory of each vessel during the detection time-period using the plurality of timestamped vessel location information datapoints. An example of a suitable kinematic model is an interacting multiple model (IMM) filter using extended alman filters and a mixture of a constant velocity and constant turn rate velocity state process model - see for instance Gregory A. Watson and W. Dale Blair "IMM algorithm for tracking targets that maneuver through coordinated turns" (Proc. SPIE 1698, Signal and Data Processing of Small Targets 1992, (25 August 1992); https://doi.org/10.1117/12.139376) or G. Siegert, P. Banyś, C. S. Martinez and F. Heymann, "EKF based trajectory tracking and integrity monitoring of AIS data," (2016 IEEE/ION Position, Location and Navigation Symposium (PLANS), Savannah, GA, USA, 2016, pp. 887-897, doi: 10.1109/PLANS.2016.7479784). Further still, additional accuracy can be achieved by using other contextually accessible data, such as geographic features of the area within the maximum detection radius which might constrain or dictate conventional or likely vessel trajectories, and/or pre-defined shipping lanes which vessels are likely or required to use as vessel trajectories.

The vessel trajectory thereby provides an estimate for vessel location at all times throughout the detection time-period, at least for locations within the maximum detection radius.

In a specific embodiment, the vessel trajectory output by this process may advantageously be used as a feedback to check the accuracy of the estimated vessel trajectory, with any estimated vessel trajectories which are deemed to be unlikely, impractical or impossible potentially being used to determine that the timestamped vessel data for this particular vessel must be inaccurate, and then discounting and removing this timestamped vessel data from the method, the method thereby continuing with the next relevant vessel.

Further, in specific embodiments in which the vessel trajectory is determined, the estimated received sound for all relevant vessels, for both vessels of the particular vessel identification information and for vessels with vessel identification information different from the particular vessel identification information, may further be determined based additionally on determining an estimated vessel velocity for each vessel throughout the detection time-period.

In particular, the vessel velocity for all vessels may be determined based on the timestamped vessel data and the vessel trajectory, throughout the detection time-period.

In particular, this process may also begin by taking the entire dataset of all the timestamped vessel data for all vessels determined to be within the maximum detection radius during the detection time-period. Given the vessel trajectory and the known timestamped vessel location information, it is possible to determine an estimated vessel velocity at any time during the detection time-period. In particular, given the vessel trajectory, i.e. the path of each vessel between each known vessel location and the distance along that path, and the time taken between the known vessel locations, the vessel velocity can be determined. Estimating the vessel velocity can be done in a number of different ways using techniques known in the field, each with varying degrees of complexity and accuracy. At a simplistic level, given two timestamped locations of a particular vessel, the distance traveled between them as defined by the vessel trajectory, and the time taken between them as provided by the timestamped vessel location information, an average velocity can be determined for all times and locations between the two locations.

Hence in the specific embodiment in which both vessel trajectory and vessel velocity is determined, the estimated received sound for each vessel throughout the detection time-period may be determined taking into account the vessel trajectory and vessel velocity, and the estimated received sound may advantageously thereby more accurately determine the estimated sound of each vessel received at the hydrophone.

In a further specific embodiment, the determining of the estimated received sound for each vessel throughout the detection time-period - for both vessels of the particular vessel identification information and vessels not of the particular vessel identification information - may in addition to determining the vessel trajectory and vessel velocity include and account for the following considerations.

First, a source sound for each vessel may be determined, based on the vessel identification information and preferably the vessel velocity. For any particular vessel, the source sound is defined as the sound pressure levels emitted by the vessel as measured at the vessel (e.g. 1m away from the vessel) whilst it is operational. In certain instances, it may be possible to directly look this value up in known databases. Alternatively, the source sound can be estimated based on the vessel identification information (e.g. the type of vessel) and preferably the vessel velocity. For instance, this may incorporate certain assumptions such as the larger the vessel, the higher the source sound, and similarly the higher the vessel velocity the higher the source sound. In a specific embodiment, the source sound is estimated using regression based on known techniques in the field which are derived from historic estimates of calibrated hydrophones - for example, a suitable vessel noise model known in the field is outlined in *de* Jong, CAF, Binnerts, B, Robinson, S, Wang, L (2021) 'Guidelines for modelling ocean ambient noise', Report of the EU INTERREG Joint Monitoring Programme for Ambient Noise North Sea (Jomopans) (accessible as of May 2024 at https://northsearegion.eu/media/17953/jomopans-guidelines-for-modelling-ocean-ambient-noise_final.pdf). For instance, a specific combination of the above approaches may include using the vessel identification information (e.g. the type of vessel) to identify a particular regression model for that vessel, where a variable of the regression model is the vessel velocity. Hence starting from the vessel type, particular regression coefficients in a particular regression model can be identified, the velocity of vessel can be input, and the source sound (estimated sound pressure levels emitted by the vessel at the vessel can be estimated. Advantageously, using any of these approaches it may also be possible to estimate the source sound for each vessel individually for different frequency bands. This is useful because for certain applications it may be desirable to analyse only a particular frequency band, for instance a frequency band associated with a particular vessel identification information of interest. Further, it may also be useful to know the frequency distribution of the sound emitted by a vessel to better model how far the sound the vessel emits travels and spreads in water, in other words knowing the frequency information may allow better modelling of the transmission loss.

Second, transmission loss for each vessel throughout the detection time-period may be determined, the transmission loss defining the proportion of the source sound which arrives at the hydrophone. For instance, the transmission loss can be estimated using known techniques in the field, such as underwater sound propagation models. In particular, these models rely primarily on the distance from the hydrophone to the vessel and the depth of the sea in the surrounding area, but can also be calibrated to account for instance: angle of vessel trajectory with respect to the hydrophone; environmental factors such as water salinity; and as previously mentioned the frequency range of the vessel's source sound.

Third, the source sound and the transmission loss for each vessel may be combined to arrive at the estimated received sound for each vessel throughout the detection time-period.

Hence in the above manner the estimated received sound for each vessel throughout the detection time-period may be determined, which may advantageously include and account for the above described determinations of at least one of the vessel trajectory, the vessel velocity, the source sound, and/or the transmission loss for each vessel as outlined above, thereby improving accuracy of the estimation.

With reference to any of the above specific embodiments in which the SINR includes the ambient sound as the interference variable, the ambient sound may be a measure of the background noise (i.e. all sea noise without vessels or anthropogenic sounds in the area), and can be determined in a number of different ways. For instance, it may be possible to lookup the value in a known database, for instance based on pre-defined historically measured values of the same or similar hydrophone setups. Alternatively, for the hydrophone in question, the database of actual received sound data could be searched to find recordings without vessel traffic, for instance by cross-checking and finding time-periods in which there are no vessels determined to be within the maximum detection radius. Alternatively or additionally, especially for actual received sound data taken over relatively longer periods of time, the ambient sound can be determined to be the value during periods which are the quietest. Further, exiting models such as for instance those outlined in the previously cited *'Guidelines for modelling ocean ambient noise'* could be used.

Optionally, in a specific embodiment, having determined the estimated received sound from all vessels - both of the particular vessel identification and vessel identifications different from the vessel particular identification information - in any manner as previously described, it is additionally possible to perform a comparison of the accuracy of the estimations performed against the actual received sound data recorded by the hydrophone.

In particular, in a first step the total estimated received sound at the hydrophone is determined by combining the estimated received sound of each vessel together, for both vessels of the particular vessel identification information and vessels vessel identification information different from the particular vessel identification information, and further combining the ambient sound with this. The integration of these values gives an estimate for the total estimated received sound at the hydrophone as created by the estimates in accordance with any aspect of the present application. This total estimated received sound may then be compared with the actual received sound data, and by virtue of this comparison it is possible to determine a measure of the accuracy of our estimation methods used to arrive at the total estimated received sound. Based on the comparison, it is possible to determine a level of confidence in the accuracy of the labels that will be produced for the given particular hydrophone actual received sound data and the available vessel data in the present instance.

Further actions can be performed based on this confidence level. For instance, if this confidence is determined to be too low and it is considered that the labels will not be sufficiently accurate it may be decided to: recalibrate or change any of the assumptions previously used to generate estimated values (e.g. in ambient sound and/or vessel trajectory and/orvesselvelocity and/or estimated received sound etc.); conclude that there is missing data in the vessel data associated with vessels which are for instance not required to publish vessel data (e.g. very small vessels or militaryvessels) where the unknown vessel may be for instance closely located to the hydrophone and masking other sounds; and/or move on to a different actual received sound dataset. Hence performing this optional step may provide an advantageous additional input into the methods of the aspects of the present application which can be used to increase the accuracy thereof.

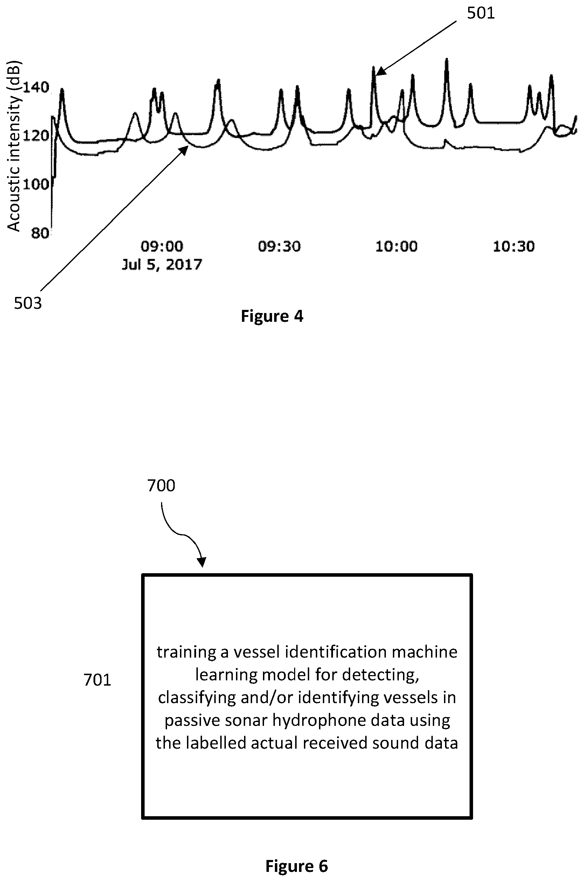

An example of a visual representation of the comparison of the total estimated received sound as against the actual received sound is shown in **Figure 4****.** In the example as shown in **Figure 4****,** the actual received sound data 501 as previously described is shown in units of decibels (dB), and plotted alongside the total estimated received sound 503.

Accordingly, in line with any aspect and specific embodiment as described above, for a particular vessel identification information, the signal-to-interference-plus-noise ratio (SINR) throughout the detection time may be determined.

In certain aspects, the SINR associated with a particular vessel identification information can be considered as the contribution of that particular vessel identification information (e.g. vessel type such as tanker, container or submarine) to the sound received at the hydrophone whilst still accounting for masking effects caused by other loud vessels in the area, e.g., a nearby tanker or container vessel might mask out even closer pleasure crafts.

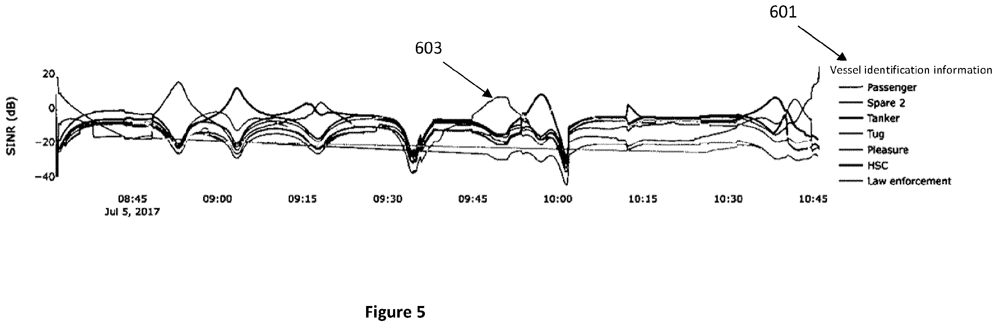

An example of a visual representation of the SINR data, as determined in accordance with any previously described aspect or specific embodiment, for a plurality of different vessel identification information values 601 is shown in **Figure 5****.** In the example as shown in **Figure 5****,** the above described process with respect to a particular vessel identification information as outlined in step 150 of **Figure 1** has been conducted in accordance with any specific embodiments described herein such that it is repeated for a number of different particular vessel identification information 601 values to create the multiple SINR dataset as shown. Hence applying thresholding as described in aspects of the present application to this multiple SINR data may advantageously create a plurality of labels simultaneously, and in a quick, efficient and automatic manner.

As outlined above, the determination of the SINR in any of the specific aspects or embodiments as previously described may form a specific embodiment of step 150 of Figure 1. As such, the process would then proceed to step 170 as outlined with respect to **Figure** 1, wherein in these specific embodiments the labels as determined in step 170 of **Figure 1** will be the particular vessel identification information and associated with times during the detection time-period where the SINR is above the threshold.

The process of applying the threshold, the choice of the value of the threshold, and the labelling is as previously described with reference to the process of **Figure 1** and step 170 above. Further, in the specific example of applying the threshold to the SINR data, a number of considerations may be additionally applied. For instance, the lower the required determined SINR the lower the threshold can be chosen, and the more classes will be annotated simultaneously. Alternatively, the higher the required SINR, the higher the threshold that can be chosen, which leads to more conservative labelling. The determination of the required level of threshold can be based on a number of factors, e.g. the choice of a higher threshold and more conservative labelling may be used in circumstances where it is considered that the hydrophone is not very sensitive, is relatively old, or for instance that there are a high number of vessels within the maximum detection radius and therefore that that for instance interference effects could easily mask out vessel sound signatures.

It is noted that whilst step 159 defines the determination as being for a particular vessel identification information, this means at least one, as the process can be performed for a plurality of different particular vessel identification information classes either at the same time, or alternatively the process can be performed multiple times with one particular vessel identification information can be determined in sequence after the other. For instance, when choosing a particular vessel identification information which specifies a particular type of vessel (e.g. tanker, container or submarine) this can be performed for multiple different types, and the subsequently labelled actual received sound data would then be useful in addressing the 'classification' level problem as described in the Background section. Alternative or additionally, the particular vessel identification information could be chosen to be a unique identifier of a particular ship (e.g. MS Hamburg), and the subsequently labelled actual received sound data would then be useful in addressing the 'identification' level problem as described in the Background section. Hence, as previously described with reference to step 170, some aspects of the present application may advantageously provide a multi-labelled hydrophone recording dataset.

Further, in certain specific embodiments, the relative SINR that generated a particular label can be retained and used as a measure of confidence that the particular vessel identification information forming the label is present during that time of the actual received sound data of the hydrophone recording. Advantageously, this confidence information could then be leveraged for multi-class classification problems similar to smooth labels (for comparison, see: arXiv:1906.02629v3 [cs.LG], *Muller, Kornblith and Hinton, 'When Does Label Smoothing Help?*').

According to some aspects and embodiments of the present application as outlined above, it is therefore possible to accurately, automatically, quickly and efficiently label actual received sound data of hydrophones.

Accordingly, by any of the aspects and specific embodiments as outlined above, it may advantageously be possible to label received sound data from hydrophones with information concerning for instance the number, the type, and/or the identity of vessels within the maximum detection radius of the hydrophone and the times at which they are contributing to the received sound of the hydrophone recording.

As compared to prior art systems, some aspects of the present application may advantageously be able to label hydrophone recording data with multiple labels relating to different vessel types and different vessel classifications, accounting for a plurality of vessels within the maximum detection radius at the same time during the detection time-period. Hence some aspects of the present application do not require only a single isolated vessel to be in the maximum detection radius to perform labelling, and are not constrained to labelling only a single vessel at any one point in time. Further, aspects of the present application may advantageously be able to label hydrophone recording data for vessels at any location within the maximum detection radius and not only at a fixed time around their closest point of approach.

Further still, some aspects of the present application may advantageously be able to accurately label hydrophone recording data in a manner that allows and accounts for interference arising from the plurality of vessels in the maximum detection radius during the detection time-period.

As outlined above, some aspects of the present application use various models of sound attenuation to provide more accurate estimations, instead of relying on more simplistic approaches such as for instance binary cut-off at a fixed range. Hence some aspects of the present application are advantageously more accurate than simple range based approaches as they are able to account for an incorporate the correlation between vessel loudness with vessel type and class and speed and mode of operation etc.

Hence the labelled actual received sound data as output by some aspects of the present application may be particularly useful when used for downstream supervised learning and training of machine learning models, particularly models for performing some level of vessel detection, classification and/or identification in passive sonar hydrophone recordings. In particular, the improved accuracy of the labelled actual received sound data as output by some aspects of the present application may therefore be advantageously used to provided improved accuracy training of machine learning models for such tasks, and further still may therefore be advantageously used to create improved machine learning models which are better and more accurate at performing vessel detection, classification and/or identification in passive sonar hydrophone recordings. Similarly, the provision of automatic labelling of the actual received sound data as provided by some aspects and embodiments of the present application allows a larger quantity of labelled data, thereby also improving the training and accuracy of any such machine learning models.

Accordingly, aspects of the present application envisage using the labelled actual received sound data as created by any previously described aspect or embodiment as part of a method of training a vessel identification machine learning model for detecting, classifying and/or identifying vessels in passive sonar hydrophone data.

Hence, as shown in **Figure 6****,** aspects of the present application provide for a flow chart of a computer-implemented method 700 of training a vessel identification machine learning model for detecting, classifying and/or identifying vessels in passive sonar hydrophone data. The method comprises training in, step 701, the vessel identification model using the labelled actual received sound data as described in any aspect or embodiment of the present application. Accordingly, improved training of an improved vessel identification model may be provided allowing for increased accuracy in the training stage.

Accordingly, aspects of the present application envisage detecting, classifying and/or identifying vessels in passive sonar hydrophone data using a vessel identification machine learning model as trained using the labelled actual received sound data as created by any previously described aspect or embodiment.

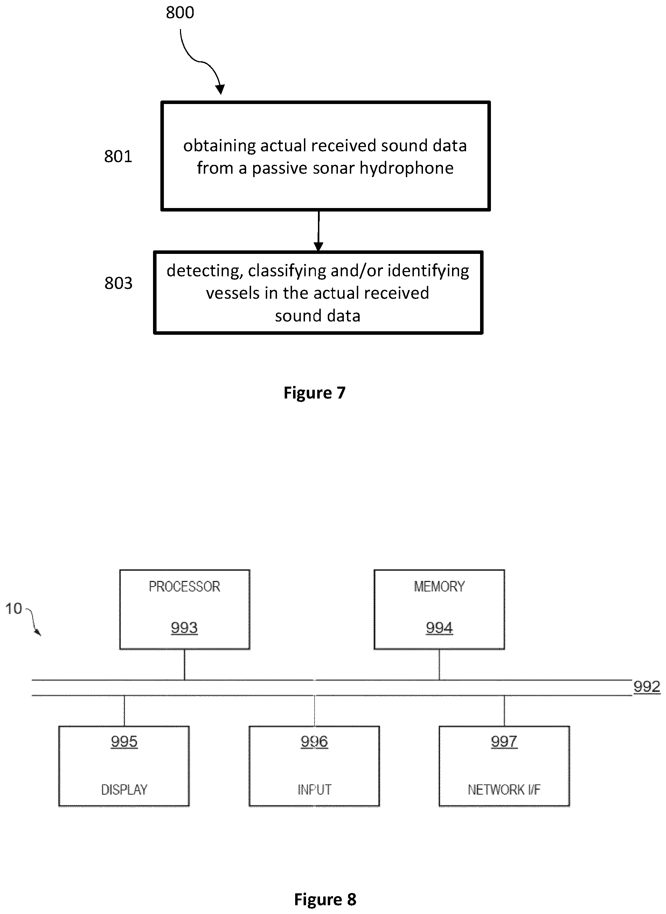

Hence, as shown in **Figure 7****,** aspects of the present application provide for a flow chart of a computer-implemented method 800 of detecting, classifying and/or identifying vessels in passive sonar hydrophone data using a vessel identification machine learning model. The method comprises obtaining, in step 801, actual sound data from a passive sonar hydrophone. The method further comprises detecting, classifying and/or identifying vessels 801 in the actual received sound data, comprising inputting the actual received sound data into a vessel identification machine learning model as trained as previously described and with reference to **Figure 6** on the actual received sound data, and receiving at least one detection, classification and/or identification result as output. Accordingly, an improved vessel identification machine learning model may be provided allowing for increased accuracy and efficiency in performing vessel detection, classification and/or identification tasks on hydrophone recording data.

With reference to the vessel identification models described above, the present application envisages any suitable machine learning model, for instance the vessel identification model may be a neural network. These will not be described further here. Further, the training is envisaged in any appropriate manner and also will not be described in detail here. For instance, the training of the vessel identification model may accordingly comprise using the labelled actual received sound data from any aspects as described above, and inputting this into the vessel identification model as training data, training the model by comparing the vessel identification classification output by the model to the known labels in the training data, and adjusting at least one network weight of the model accordingly based on the comparison. For instance, the adjusting may be using standard techniques involving classification loss learning, such as a cross-entropy loss function. Other appropriate machine learning models and training methods are accordingly envisaged.

For the purposes of the present disclosure, the term "machine learning model" encompasses within its scope the following concepts:
- machine Learning algorithms, comprising processes or instructions through which data may be used in a training process to generate a model artefact for performing a given task, or for representing a real world process or system;
- the model artefact that is created by such a training process, and which comprises the computational architecture that performs the task; and
- the process performed by the model artefact in order to complete the task.

References to "machine learning model", "model", model parameters", "model information", etc., may thus be understood as relating to any one or more of the above concepts encompassed within the scope of "Machine learning model".

### Example Computer System Implementation

**Figure 8** is a block diagram of an information processing apparatus 10 or a computing device 10, such as a data storage server, which embodies the present invention, and which may be used to implement some or all of the operations of a method embodying the present invention, and perform some or all of the tasks of apparatus of an embodiment. The computing device 10 may be used to implement any of the method steps described above and/or any processes described above.

The computing device 10 comprises a processor 993 and memory 994. Optionally, the computing device also includes a network interface 997 for communication with other such computing devices. Optionally, the computing device also includes one or more input mechanisms such as keyboard and mouse 996, and a display unit such as one or more monitors 995. These elements may facilitate user interaction. The components are connectable to one another via a bus 992.

The memory 994 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. For example, the computer-executable instructions may include those instructions for implementing a method disclosed herein, or any method steps disclosed herein, and/or any processes described above. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement any of the method steps described herein. The memory 994 stores data being read and written by the processor 993 and may store training data and/or network weights and/or patches and/or updated patches and/or embeddings and/or vectors and/or graphs and/or representations and/or difference amounts and/or equations and/or other data, described above, and/or programs for executing any of the method steps and/or processes described above. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor 993 may be considered to comprise any of the modules described above. Any operations described as being implemented by a module may be implemented as a method by a computer and e.g. by the processor 993.

Optionally, the apparatus 10 includes a display unit 995 which may display a representation of data stored by the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc. may be included in the computing device.

Methods embodying the present invention may be carried out on a computing device/apparatus 10 such as that illustrated in **Figure 8****.** Such a computing device need not have every component illustrated in **Figure 8****,** and may be composed of a subset of those components. For example, the apparatus 10 may comprise the processor 993 and the memory 994 connected to the processor 993. Or the apparatus 10 may comprise the processor 993, the memory 994 connected to the processor 993, and the display 995. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

## Claims

1. A computer-implemented method (100) of automatically labelling passive sonar hydrophone data for use as a supervised learning dataset, comprising:
for a selected passive sonar hydrophone: obtaining (110) actual received sound data throughout a detection time-period, obtaining a hydrophone location, and determining a maximum detection radius around the hydrophone location;
retrieving (130) timestamped vessel data associated with vessels within the maximum detection radius during the detection time-period, the timestamped vessel data comprising for each vessel: vessel location information and vessel identification information;
determining (150), for a particular vessel identification information, an estimated received sound metric for each vessel throughout the detection time-period, based on the timestamped vessel data;
labelling (170) the actual received sound data, the labels including the particular vessel identification information and being associated with times during the detection time-period where the estimated received sound metric is above a threshold.

2. The computer-implemented method (100) of claim 1, wherein the estimated received sound metric is an estimated received sound pressure level of each vessel received at the hydrophone, and the labels including the particular vessel identification information and being associated with times during the detection time-period where the estimated received sound is above the threshold.

3. The computer-implemented method (100) of claim 1, wherein the estimated received sound metric is a signal-to-interference-plus-noise ratio (SINR) signal estimated based on an estimated sound of the respective vessel and estimated noise and/or ambient sound, in particular wherein:
the signal variable is a combined estimated received sound, defining an estimated sound of each vessel received at the hydrophone throughout the detection time-period, for vessels of the particular vessel identification information;
the noise variable is a combined estimated received sound, defining an estimated sound of each vessel received at the hydrophone throughout the detection time-period, for vessels with vessel identification information different from the particular vessel identification information;
the interference variable is an ambient sound, defining ambient sound from all sound sources which are not vessels; and/or
the labels including the particular vessel identification information and being associated with times during the detection time-period where the SINR is above the threshold.

4. The computer-implemented method (100) of claim 3, wherein:
the combined estimated received sounds, for vessels of the particular vessel identification information and for vessels with vessel identification information different from the particular vessel identification information, are determined based on determining the estimated received sound for each vessel throughout the detection time-period, in particular comprising:
determining vessel trajectory for each vessel throughout the detection time-period, based on the timestamped vessel data; and
preferably, determining vessel velocity for each vessel, based on the timestamped vessel data and the vessel trajectory, throughout the detection time-period.

5. The computer-implemented method (100) of claim 4, wherein the determining of the estimated received sound for each vessel throughout the detection time-period further comprises:
determining a source sound for each vessel, based on the vessel identification information and, preferably, the vessel velocity;
determining transmission loss for each vessel throughout the detection time-period, the transmission loss defining the proportion of the source sound which arrives at the hydrophone; and
combining the source sound and the transmission loss to arrive at the estimated received sound for each vessel throughout the detection time-period.

6. The computer-implemented method (100) of claim 5, wherein the determining the source sound is further based on regression based on historic estimates of calibrated hydrophones.

7. The computer-implemented method (100) of any one of claims 4 to 6, wherein the determining the vessel trajectory comprises using a kinematic model.

8. The computer-implemented method (100) of any one of claims 5 to 7, wherein the determining the transmission loss is based on an underwater sound propagation model.

9. The computer-implemented method (100) of any one of claims 3 to 8, wherein determining the ambient sound is based on periods during the actual received sound data when the actual received sound data is lowest, and/or when no vessels are determined to be in the maximum detection radius, and optionally wherein determining the ambient sound is based on pre-defined historical values.

10. The computer-implemented method (100) of any one of claims 3 to 9, further comprising:
determining a total estimated received sound at the hydrophone, comprising: combining:
the combined estimated received sound for each vessel of the particular vessel identification information; with
the combined estimated received sound for each vessel with vessel identification information different from the particular vessel identification information; and with
the ambient sound; and further comprising
comparing the total estimated received sound with the actual received sound data to determine the accuracy of the total estimated received sound.

11. The computer-implemented method (100) of any preceding claim, wherein the threshold is chosen to be relatively high when: it is determined that there is a relatively high number of vessels determined to be in the maximum detection radius, and/or it is determined that the hydrophone is of relatively low sensitivity.

12. The computer-implemented method (100) of any preceding claim, wherein:
the vessel identification information comprises vessel type and/or a unique vessel identifier; and/or
the timestamped vessel data further comprises the speed and heading of the vessel.

13. A computer-implemented method (100) of training a vessel identification machine learning model for detecting, classifying and/or identifying vessels in passive sonar hydrophone data, comprising:
training the vessel identification model using the actual received sound data labelled according to any preceding claim.

14. A computer-implemented method (100) of detecting, classifying and/or identifying vessels in passive sonar hydrophone data using a vessel identification machine learning model, comprising:
obtaining actual received sound data from a passive sonar hydrophone;
detecting, classifying and/or identifying vessels in the actual received sound data, comprising inputting the actual received sound data into a vessel identification machine learning model as trained by the method of claim 13 and receiving at least one detection, classification and/or identification result as output.

15. A computer-readable storage medium comprising instructions which, when executed by a computer, cause the computer to carry out the method (100) of any preceding claim.

## Patentansprüche

1. Computerimplementiertes Verfahren (100) zum automatischen Markieren von passiven Sonarhydrophondaten zur Verwendung als ein Datensatz für überwachtes Lernen, umfassend:
für ein ausgewähltes passives Sonarhydrophon: Erhalten (110) von tatsächlichen empfangenen Schalldaten über eine Erfassungszeitspanne hinweg, Erhalten eines Hydrophonstandorts und Bestimmen eines maximalen Erfassungsradius um den Hydrophonstandort;
Abrufen (130) von mit Zeitstempel versehenen Schiffsdaten, die mit Schiffen innerhalb des maximalen Erfassungsradius während der Erfassungszeitspanne verknüpft sind, wobei die mit Zeitstempel versehenen Schiffsdaten für jedes Schiff Folgendes umfassen: Schiffsstandortinformationen und Schiffsidentifizierungsinformationen;
Bestimmen (150) einer geschätzten Metrik eines empfangenen Schalls für jedes Schiff über die Erfassungszeitspanne hinweg für besondere Schiffsidentifizierungsinformationen basierend auf den mit Zeitstempel versehenen Schiffsdaten;
Markieren (170) der tatsächlichen empfangenen Schalldaten, wobei die Markierungen die besonderen Schiffsidentifizierungsinformationen beinhalten und mit Zeitpunkten während der Erfassungszeitspanne verknüpft sind, zu denen die geschätzte Metrik des empfangenen Schalls über einem Schwellenwert ist.

2. Computerimplementiertes Verfahren (100) nach Anspruch 1, wobei die geschätzte Metrik des empfangenen Schalls ein geschätzter Druckpegel des empfangenen Schalls jedes Schiffes ist, der an dem Hydrophon empfangen wird, und die Markierungen die besonderen Schiffsidentifizierungsinformationen beinhalten und mit Zeitpunkten während der Erfassungszeitspanne verknüpft sind, zu denen der geschätzte empfangene Schall über dem Schwellenwert ist.

3. Computerimplementiertes Verfahren (100) nach Anspruch 1, wobei die geschätzte Metrik des empfangenen Schalls ein Signalzu-Störung-plus-Rausch-Verhältnis(SINR)-Signal ist, das basierend auf einem geschätzten Schall des jeweiligen Schiffes und geschätztem Rauschen und/oder Umgebungsschall geschätzt wird, wobei insbesondere:
die Signalvariable ein kombinierter geschätzter empfangener Schall ist, der einen geschätzten Schall jedes Schiffes definiert, der an dem Hydrophon über die Erfassungszeitspanne hinweg für Schiffe der besonderen Schiffsidentifizierungsinformationen empfangen wird;
die Rauschvariable ein kombinierter geschätzter empfangener Schall ist, der einen geschätzten Schall jedes Schiffes definiert, der an dem Hydrophon über die Erfassungszeitspanne hinweg für Schiffe mit von den besonderen Schiffsidentifizierungsinformationen verschiedenen Schiffsidentifizierungsinformationen empfangen wird;
die Störvariable ein Umgebungsschall ist, der den Umgebungsschall aus allen Schallquellen, die nicht Schiffe sind, definiert; und/oder
die Markierungen die besonderen Schiffsidentifizierungsinformationen beinhalten und mit Zeitpunkten während der Erfassungszeitspanne verknüpft sind, zu denen das SINR über dem Schwellenwert ist.

4. Computerimplementiertes Verfahren (100) nach Anspruch 3, wobei:
die kombinierten geschätzten empfangenen Schalle für Schiffe der besonderen Schiffsidentifizierungsinformationen und für Schiffe mit von den besonderen Schiffsidentifizierungsinformationen verschiedenen Schiffsidentifizierungsinformationen basierend auf dem Bestimmen des geschätzten empfangenen Schalls für jedes Schiff über die Erfassungszeitspanne hinweg bestimmt werden, insbesondere umfassend:
Bestimmen einer Schiffstrajektorie für jedes Schiff über die Erfassungszeitspanne hinweg basierend auf den mit Zeitstempel versehenen Schiffsdaten; und
vorzugsweise Bestimmen einer Schiffsgeschwindigkeit für jedes Schiff basierend auf den mit Zeitstempel versehenen Schiffsdaten und der Schiffstrajektorie über die Erfassungszeitspanne hinweg.

5. Computerimplementiertes Verfahren (100) nach Anspruch 4, wobei das Bestimmen des geschätzten empfangenen Schalls für jedes Schiff über die Erfassungszeitspanne hinweg ferner Folgendes umfasst:
Bestimmen eines Quellschalls für jedes Schiff basierend auf den Schiffsidentifizierungsinformationen und vorzugsweise der Schiffsgeschwindigkeit;
Bestimmen eines Übertragungsverlustes für jedes Schiff über die Erfassungszeitspanne hinweg, wobei der Übertragungsverlust den Anteil des Quellschalls definiert, der an dem Hydrophon ankommt; und
Kombinieren des Quellschalls und des Übertragungsverlustes, um an dem geschätzten empfangenen Schall für jedes Schiff über die Erfassungszeitspanne hinweg anzukommen.

6. Computerimplementiertes Verfahren (100) nach Anspruch 5, wobei das Bestimmen des Quellschalls ferner auf einer Regression basierend auf historischen Schätzungen von kalibrierten Hydrophonen basiert.

7. Computerimplementiertes Verfahren (100) nach einem der Ansprüche 4 bis 6, wobei das Bestimmen der Schiffstrajektorie ein Verwenden eines kinematischen Modells umfasst.

8. Computerimplementiertes Verfahren (100) nach einem der Ansprüche 5 bis 7, wobei das Bestimmen des Übertragungsverlustes auf einem Unterwasserschallausbreitungsmodell basiert.

9. Computerimplementiertes Verfahren (100) nach einem der Ansprüche 3 bis 8, wobei das Bestimmen des Umgebungsschalls auf Spannen während der tatsächlichen empfangenen Schalldaten basiert, wenn die tatsächlichen empfangenen Schalldaten am niedrigsten sind und/oder wenn bestimmt wird, dass keine Schiffe in dem maximalen Erfassungsradius sind, und wobei das Bestimmen des Umgebungsschalls optional auf vordefinierten historischen Werten basiert.

10. Computerimplementiertes Verfahren (100) nach einem der Ansprüche 3 bis 9, ferner umfassend:
Bestimmen eines gesamten geschätzten empfangenen Schalls an dem Hydrophon, umfassend:
Kombinieren:
des kombinierten geschätzten empfangenen Schalls für jedes Schiff der besonderen Schiffsidentifizierungsinformationen; mit dem kombinierten geschätzten empfangenen Schall für jedes Schiff mit von den besonderen Schiffsidentifizierungsinformationen verschiedenen Schiffsidentifizierungsinformationen; und mit dem Umgebungsschall; und ferner umfassend
Vergleichen des gesamten geschätzten empfangenen Schalls mit den tatsächlichen empfangenen Schalldaten, um die Genauigkeit des gesamten geschätzten empfangenen Schalls zu bestimmen.

11. Computerimplementiertes Verfahren (100) nach einem der vorhergehenden Ansprüche, wobei entschieden wird, dass der Schwellenwert relativ hoch ist, wenn: bestimmt wird, dass bestimmt wird, dass eine relativ große Anzahl von Schiffen in dem maximalen Erfassungsradius ist, und/oder bestimmt wird, dass das Hydrophon eine relativ geringe Empfindlichkeit aufweist.

12. Computerimplementiertes Verfahren (100) nach einem der vorhergehenden Ansprüche, wobei:
die Schiffsidentifizierungsinformationen eine Schiffsart und/oder eine eindeutige Schiffskennung umfassen; und/oder die mit Zeitstempel versehenen Schiffsdaten ferner das Tempo und den Kurs des Schiffes umfassen.

13. Computerimplementiertes Verfahren (100) zum Trainieren eines maschinellen Lernmodells zur Schiffsidentifizierung zum Erfassen, Klassifizieren und/oder Identifizieren von Schiffen in passiven Sonarhydrophondaten, umfassend:
Trainieren des Schiffsidentifizierungsmodells mithilfe der tatsächlichen empfangenen Schalldaten, die nach einem der vorhergehenden Ansprüche markiert werden.

14. Computerimplementiertes Verfahren (100) zum Erfassen, Klassifizieren und/oder Identifizieren von Schiffen in passiven Sonarhydrophondaten mithilfe eines maschinellen Lernmodells zur Schiffsidentifizierung, umfassend:
Erhalten der tatsächlichen empfangenen Schalldaten von einem passiven Sonarhydrophon;
Erfassen, Klassifizieren und/oder Identifizieren von Schiffen in den tatsächlichen empfangenen Schalldaten, umfassend ein Eingeben der tatsächlichen empfangenen Schalldaten in ein maschinelles Lernmodell zur Schiffsidentifizierung, wie es durch das Verfahren nach Anspruch 13 trainiert wird, und ein Empfangen mindestens eines Erfassungs-, Klassifizierungs- und/oder Identifizierungsergebnisses als Ausgabe.

15. Computerlesbares Speichermedium, umfassend Anweisungen, die, wenn sie durch einen Computer ausgeführt werden, den Computer dazu veranlassen, das Verfahren (100) nach einem der vorhergehenden Ansprüche durchzuführen.

## Revendications

1. Procédé mis en œuvre par ordinateur (100) d'étiquetage automatique de données d'hydrophone sonar passif destinées à être utilisées comme ensemble de données d'apprentissage supervisé, comprenant :
pour un hydrophone sonar passif sélectionné : l'obtention (110) de données sonores reçues réelles tout au long d'une période de détection, l'obtention d'un emplacement d'hydrophone et la détermination d'un rayon de détection maximal autour de l'emplacement d'hydrophone ;
la récupération (130) de données de navire horodatées associées aux navires dans le rayon de détection maximal au cours de la période de détection, les données de navire horodatées comprenant pour chaque navire : des informations d'emplacement de navire et des informations d'identification de navire ;
la détermination (150), pour des informations d'identification de navire particulières, d'une métrique sonore reçue estimée pour chaque navire tout au long de la période de détection, sur la base des données de navire horodatées ;
l'étiquetage (170) des données sonores reçues réelles, les étiquettes comportant les informations d'identification de navire particulières et étant associées à des moments, au cours de la période de détection, auxquels la métrique sonore reçue estimée est supérieure à un seuil.

2. Procédé mis en œuvre par ordinateur (100) selon la revendication 1, dans lequel la métrique sonore reçue estimée est un niveau de pression sonore reçu estimé de chaque navire reçu au niveau de l'hydrophone, et les étiquettes comportant les informations d'identification de navire particulières et étant associées à des moments, au cours de la période de détection, auxquels le son reçu estimé est supérieur au seuil.

3. Procédé mis en œuvre par ordinateur (100) selon la revendication 1, dans lequel la métrique sonore reçue estimée est un signal de rapport signal sur interférence plus bruit (SINR) estimé sur la base d'un son estimé du navire respectif et d'un bruit estimé et/ou du son ambiant, en particulier dans lequel :
la variable de signal est un son reçu estimé combiné, définissant un son estimé de chaque navire reçu au niveau de l'hydrophone tout au long de la période de détection, pour les navires des informations d'identification de navire particulières ;
la variable de bruit est un son reçu estimé combiné, définissant un son estimé de chaque navire reçu au niveau de l'hydrophone tout au long de la période de détection, pour les navires avec des informations d'identification de navire différentes des informations d'identification de navire particulières ;
la variable d'interférence est un son ambiant, définissant le son ambiant provenant de toutes les sources sonores qui ne sont pas des navires ; et/ou
les étiquettes comportant les informations d'identification de navire particulières et étant associées aux moments, au cours de la période de détection, auxquels le SINR est supérieur au seuil.

4. Procédé mis en œuvre par ordinateur (100) selon la revendication 3, dans lequel :
les sons reçus estimés combinés, pour les navires des informations d'identification de navire particulières et pour les navires avec des informations d'identification de navire différentes des informations d'identification de navire particulières, sont déterminées sur la base de la détermination du son reçu estimé pour chaque navire tout au long de la période de détection, comprenant en particulier :
la détermination de la trajectoire de navire pour chaque navire tout au long de la période de détection, sur la base des données de navire horodatées ; et
de préférence, la détermination de la vitesse de navire pour chaque navire, sur la base des données de navire horodatées et
de la trajectoire de navire, tout au long de la période de détection.

5. Procédé mis en œuvre par ordinateur (100) selon la revendication 4, dans lequel la détermination du son reçu estimé pour chaque navire tout au long de la période de détection comprend en outre :
la détermination d'une source sonore pour chaque navire, sur la base des informations d'identification de navire et, de préférence, de la vitesse de navire ;
la détermination de la perte de transmission pour chaque navire tout au long de la période de détection, la perte de transmission définissant la proportion de la source sonore qui parvient à l'hydrophone ; et
la combinaison de la source sonore et de la perte de transmission pour parvenir au son reçu estimé pour chaque navire tout au long de la période de détection.

6. Procédé mis en œuvre par ordinateur (100) selon la revendication 5, dans lequel la détermination de la source sonore est en outre basée sur une régression basée sur des estimations historiques d'hydrophones calibrés.

7. Procédé mis en œuvre par ordinateur (100) selon l'une quelconque des revendications 4 à 6, dans lequel la détermination de la trajectoire de navire comprend l'utilisation d'un modèle cinématique.

8. Procédé mis en œuvre par ordinateur (100) selon l'une quelconque des revendications 5 à 7, dans lequel la détermination de la perte de transmission est basée sur un modèle de propagation sonore sous-marin.

9. Procédé mis en œuvre par ordinateur (100) selon l'une quelconque des revendications 3 à 8, dans lequel la détermination du son ambiant est basée sur des périodes, au cours des données sonores reçues réelles, auxquelles les données sonores reçues réelles sont les plus faibles, et/ou auxquelles aucun navire n'est déterminé dans le rayon de détection maximal, et éventuellement dans lequel la détermination du son ambiant est basée sur des valeurs historiques prédéfinies.

10. Procédé mis en œuvre par ordinateur (100) selon l'une quelconque des revendications 3 à 9, comprenant en outre :
la détermination d'un son reçu estimé total au niveau de l'hydrophone, comprenant : la combinaison :
du son reçu estimé combiné pour chaque navire des informations d'identification de navire particulières ; avec le son reçu estimé combiné pour chaque navire avec des informations d'identification de navire différentes des informations d'identification de navire particulières ; et avec le son ambiant ; et comprenant en outre
la comparaison du son reçu estimé total avec les données sonores reçues réelles pour déterminer la précision du son reçu estimé total.

11. Procédé mis en œuvre par ordinateur (100) selon une quelconque revendication précédente, dans lequel le seuil est choisi pour être relativement élevé : lorsqu'il est déterminé qu'il existe un nombre relativement élevé de navires déterminés comme étant dans le rayon de détection maximal, et/ou lorsqu'il est déterminé que l'hydrophone est d'une sensibilité relativement faible.

12. Procédé mis en œuvre par ordinateur (100) selon une quelconque revendication précédente, dans lequel :
les informations d'identification de navire comprennent le type de navire et/ou un identifiant de navire unique ; et/ou
les données de navire horodatées comprennent en outre la vitesse et le cap du navire.

13. Procédé mis en œuvre par ordinateur (100) d'entraînement d'un modèle d'apprentissage automatique d'identification de navire pour la détection, la classification et/ou l'identification de navires dans des données d'hydrophone sonar passif, comprenant :
l'entraînement du modèle d'identification de navire à l'aide des données sonores reçues réelles étiquetées selon une quelconque revendication précédente.

14. Procédé mis en œuvre par ordinateur (100) de détection, de classification et/ou d'identification de navires dans des données d'hydrophone sonar passif utilisant un modèle d'apprentissage automatique d'identification de navire, comprenant :
l'obtention de données sonores reçues réelles à partir d'un hydrophone sonar passif ;
la détection, la classification et/ou l'identification de navires dans les données sonores reçues réelles, comprenant l'entrée des données sonores reçues réelles dans un modèle d'apprentissage automatique d'identification de navire tel qu'entraîné par le procédé selon la revendication 13 et la réception d'au moins un résultat de détection, de classification et/ou d'identification en sortie.

15. Support de stockage lisible par ordinateur comprenant des instructions qui, lorsqu'elles sont exécutées par un ordinateur, amènent l'ordinateur à effectuer le procédé (100) selon une quelconque revendication précédente.
